# EUROPEAN PATENT SPECIFICATION

(11) **EP 2 216 202 B1**
(45) Date of publication and mention of the grant of the patent: **28.12.2011**
(21) Application number: 10152866.9
(22) Date of filing: 08.02.2010
(51) Int. Cl.: B60R 3/02

(54) **A retractable step for motor vehicles**
Einziehbare Stufe für Motorfahrzeuge
Marche rétractable pour véhicules à moteur

(30) Priority: 09.02.2009 IT RE20090010
(43) Date of publication of application: 11.08.2010
(73) Proprietor: Stem S.r.l., 43014 Medesano (PR) (IT)
(72) Inventor: Menna, Ezio, 43014 Medesano (Parma) (IT)
(74) Representative: Corradini, Corrado

(56) References cited:
- GB-A- 745 918
- JP-A- 9 095 182
- US-A- 3 494 634
- US-A1- 2008 042 396

## Description

The invention relates to a retractable step for motor vehicles, in particular ambulances, or other vehicles, such as buses, camper vans etc., i.e. vehicles where a floor thereof is located at a relatively large distance from the ground on which the vehicle is parked. Such a retractable step is described in US 3 494 634.

The prior art includes motorised retractable steps comprising a support frame which is solidly mounted on the vehicle and at least a tread, constrained to the frame by a link system, such as to be mobile by oscillation between a completely extracted position and a completely retracted position with respect to the vehicle volume, comprising means for bringing the tread into the completely extracted position (typically when the vehicle door is open) and the completely retracted position (when the vehicle door is closed).

These steps are constrained to the vehicle by means of a four-bar linkage system activated by actuators.

A technical problem connected with these steps relates to the need to stably block the tread in a completely extracted position, in order to prevent it from displacing, if bumped into by objects or people, towards the retracted position, even partially, with the risk that it might occasion a fall or in any case an injury to individuals using the tread at that particular moment.

This and other problems besides are resolved by the present invention, as it is characterised in the claims.

The invention is described in detail in the following, done with the aid of the accompanying figures of the drawings, which illustrate a non-exclusive embodiment thereof, and in which:

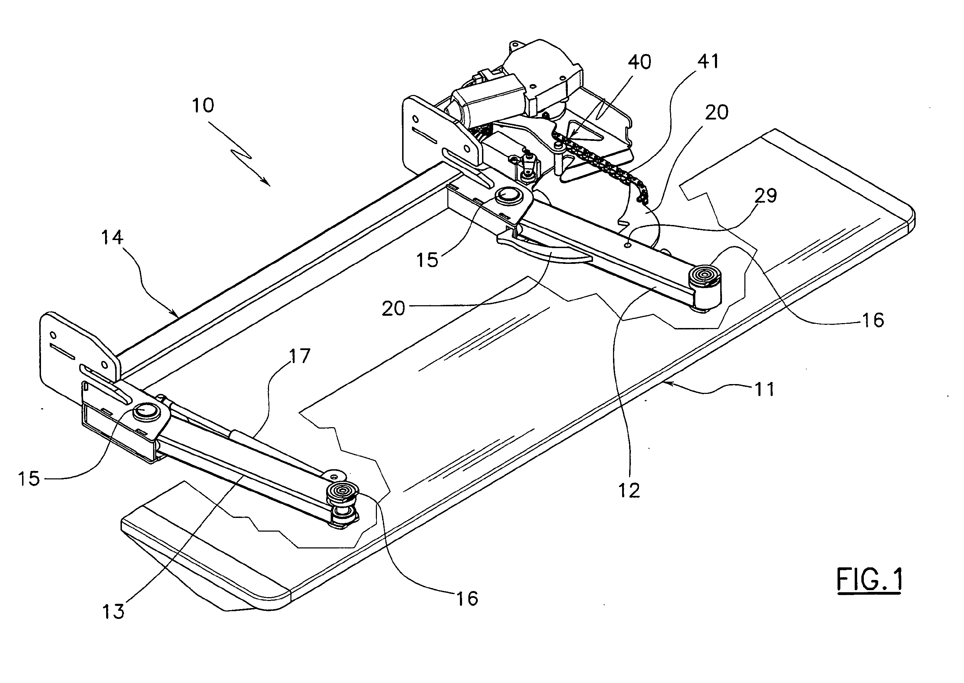

figure 1 is a perspective view of the step alone (separate from the vehicle);
figure 2 is a plan view of the step, in which the tread is in a completely extracted position, projecting out from the vehicle;
figure 3 is the same view as in figure 2, where the tread is in a partially retracted position;
figure 4 is the view of figure 2 in which the tread is in a completely retracted position;

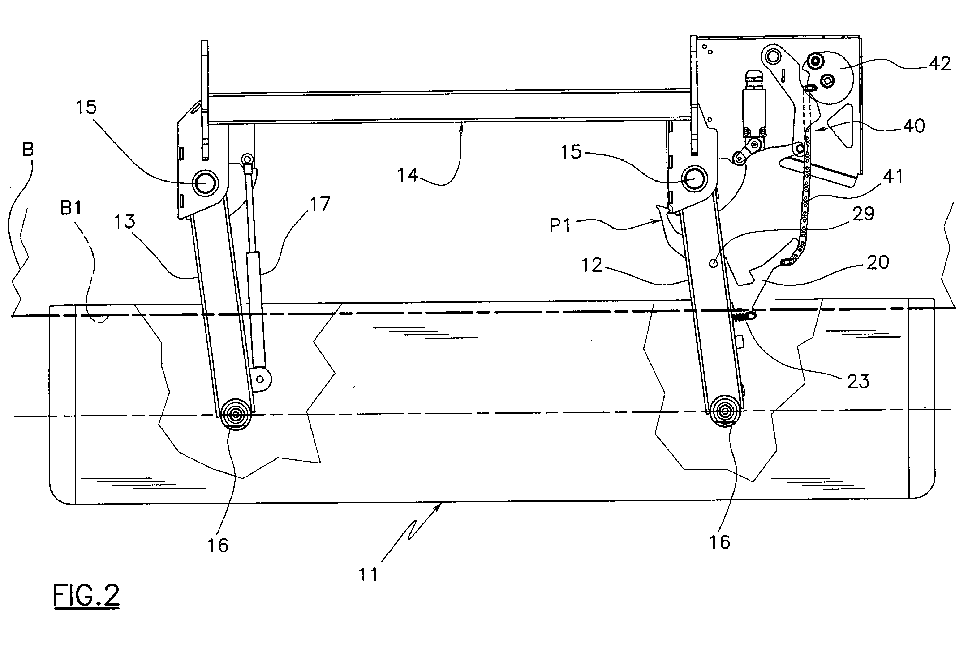

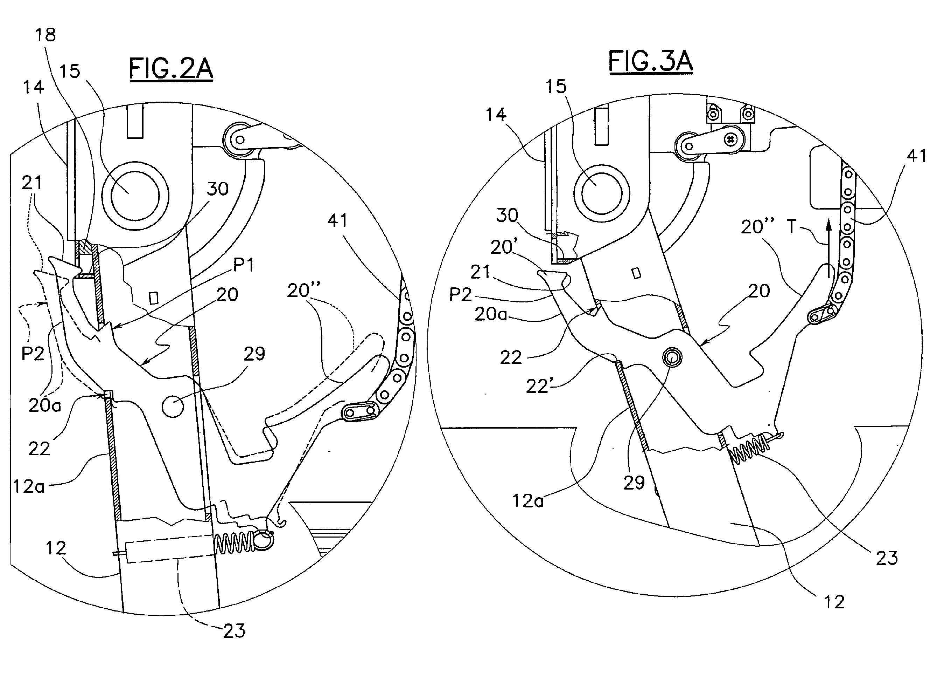

figure 2A is an enlarged detail of figure 2;

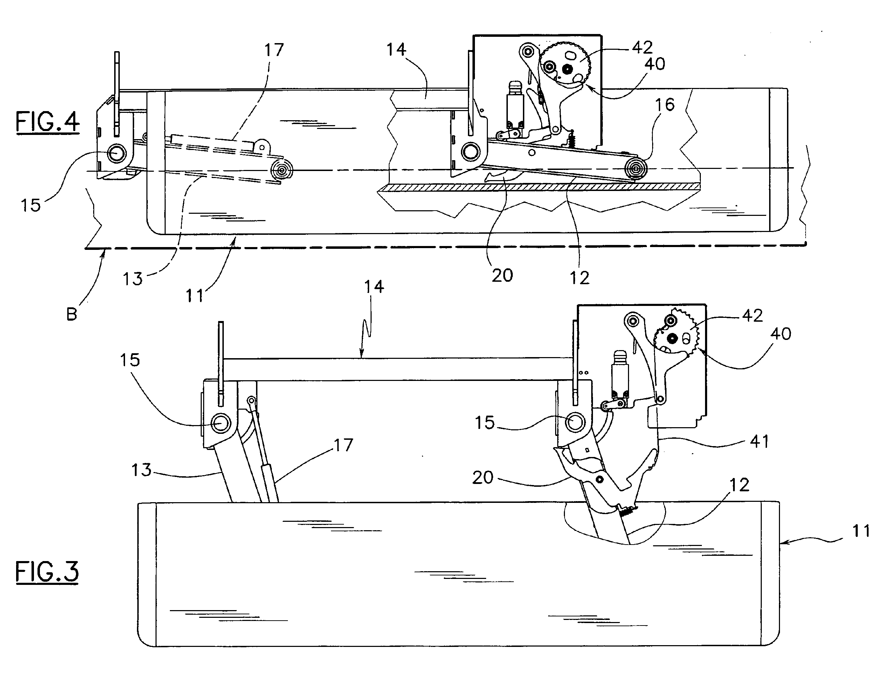

figure 3A is an enlarged detail of figure 3;

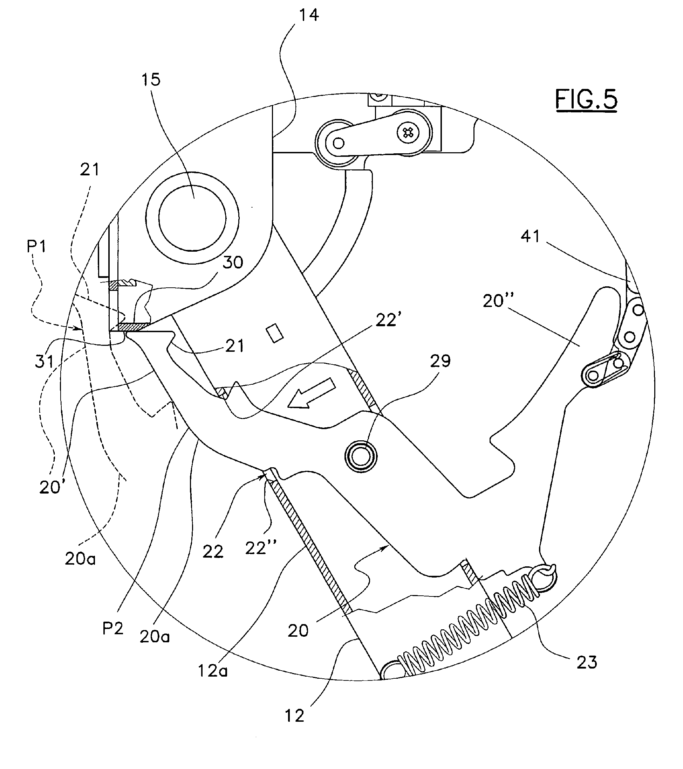

figure 5 is a further-enlarged detail of figure 3, while the tread is moving into the completely extracted position.

The step of the invention, denoted in its entirety by 10, comprises at least a tread 11, constrained to a frame 14 which in turn is fixed to the vehicle (denoted by B and only partially illustrated); the tread 11 is constrained to the frame 14 via a bar linkage system such as to be mobile by oscillating between a completely extracted position (illustrated in figure 2) beyond the volume of the vehicle B and a completely retracted position (illustrated in figure 4) internal of the volume of the vehicle B.

In particular, the tread 11 is constrained to two oscillating arms 12 and 13, which are parallel to one another and hinged to the frame 14 such as to define a four-bar linkage, in which oscillation of the arms 12, 13 causes the movement of the tread between the completely extracted and the completely retracted positions.

In detail, in the embodiment illustrated in the figures, the two arms 12 and 13 are hinged at distal ends thereof to the support frame 14 by means of pivots 15 having more-or-less vertical axes.

The frame 14 is solidly constrained to a lower surface B2, located in the lower part of the vehicle B, facing downwards, such that when the tread 11 is in the completely retracted position it does not project horizontally from the side B1 of the vehicle B. The tread 11 is in turn hinged to the proximal end of the arms 12, 13 by means of pivots 16 having more-or-less vertical axes. When the tread 11 is in the completely extracted position, the arms 12, 13 have an almost-perpendicular orientation to the vertical surface B1 of the vehicle, forming a relatively small angle with the perpendicular, while when the tread 11 is in the completely retracted position the arms 12, 13 are almost parallel to the surface of the side B1. In order to move from a position into the other, the arms 12, 13 shift through an angle of almost 90°.

First means are provided to move the tread into the completely extracted position.

For example, the first means can be spring means 17 providing a continuous push, applied between one of the arms 12,13 and the support frame 14. The spring means 17 are preferably a gas spring or the like, comprising a pressurised gas and having an end hinged to the frame 14 and another end hinged to an arm (in the figures to the arm 13), close to the proximal end thereof. The longitudinal axis of the spring 17 forms a relatively small angle with the arm 13; when the tread 11 is brought into the completely retracted position the spring 17 compresses, while when the tread is brought into the completely extracted position, the spring 17 extends; thus the spring of the gas in the cylinder tends to push the arms 12, 13 continuously towards the completely extracted position.

The geometric configuration of the mechanism defined by the step and the spring 17 is such that in the first part of the rotation of the arms 12, 13, directed towards the completely extracted position, if the tread meets an obstacle, the reaction produced by the obstacle which is necessary to overcome the pushing action of the spring 17 is relatively small; on the contrary, when the tread is in the completely or almost-completely extracted position, a relatively much greater force directed perpendicular to the vertical surface B1 is required to overcome the spring 17 action; in the second case, the arms 12, 13 are almost perpendicular to the surface B1 and the force would produce a rotation moment having a relatively very small arm. Thanks to the described geometric configuration, when the tread is brought towards the completely extracted position, it does not produce a damaging impact against an obstacle, and will therefore not cause injury to persons or objects. When it is in the completely extracted position, on the other hand, a relatively smart push is required, if directed perpendicular to the vehicle, to move the tread 11. Thus the tread possesses a good degree of stability in the face of undesired displacements produced by people stepping up or down on the step.

Also included are means 40 (in particular motorised) for pulling the tread 11 towards the retracted position against the action of the spring means 17, and to release the spring means 17 in order that the tread 11 can be brought into the completely extracted position.

In a preferred embodiment (though not exclusive), the pulling means 40 (see figure 2) comprise a drawing chain 41 (or other flexible element) having an end constrained to the arm 12 and the other end which winds about a peripheral edge of a rotating means, in particular a rotating cam 42 set in rotation by an electric actuator, a rotation axis of which is fixed with respect to the vehicle and parallel to the axes of the pivots 15.

When the cam 42 rotates in the winding direction (in the clockwise direction in the figures) the chain 41 winds thereon and the tread 11 is pulled into the completely retracted position.

When the cam 42 rotates in the unwinding direction (in the anticlockwise direction in the figures), the chain 41 unwinds therefrom until the chain is (more or less completely) out of contact with the cam and the tread 11 is in the completely extracted position.

The invention comprises a hook lever 20 constrained to an oscillating part of the bar linkage (in particular the four-bar linkage constituted by the tread 11, the arms 12 and 13 and the support frame 14) destined to be hooked to a fixed engaging element 30 fixed (in particular fixed to the frame 14), such as to block the tread 11 in a completely extracted position, the hooking action being freed following the action of the pulling means 40 in which the pulling means 40 are activated to draw the tread 11 towards the completely retracted position.

In a preferred embodiment (though not exclusive) the linked system exhibits at least an oscillating arm 12 the oscillation of which determines the completely extracted position and the completely retracted position of the tread 11, and the hook lever 20 is constrained to the oscillating arm 12.

In a preferred embodiment, the hook lever 20 comprises a distal end 20' in which a hook 21 is afforded for hooking to the engaging element 30. Further, the lever 20 can oscillate with respect to the mobile part to which it is constrained (i.e. the arm 12) between a first position P1 (illustrated with a continuous line in figure 2A) and a second position P2 (illustrated in figure 3A and in a broken line in figure 2A) in which the hook 21 is freed from the engagement with the engaging element 30. In particular, though not exclusively, the oscillation of the lever 20 occurs with the rotation axis parallel or almost parallel to the rotation axes of the oscillating part of the linked system (i.e. the arm 12).

In particular, though not exclusively, the lever 20 is flat and hook-shaped and is hinged by a pivot 29 having a more-or-less vertical axis to the arm 12: the arm 12 exhibits a lateral wall in which a slit 22 is afforded having a distal end 22' and a proximal end 22". The lever 20 is located through the slit 22. The pivot 29 is located in an intermediate position of the arm 12 at a distance from the pivot 15 and the pivot 16.

Passing from the first position P1 to the second position P2, the angle defined by the longitudinal axis of the arm 12 and the straight line joining the pivot 29 and the distal end 20' of the lever 20 increases; further, the distal portion 20a of the lever 20 nears the proximal end 22" of the slit 22; on the contrary, in passing from the second P2 to the first position P1, the angle reduces and the distal portion 20a of the lever 20 nears the distal end 22' of the slit 22.

A spring pushing means 23 constrains the lever 20 and the arm 12 to one another and constantly pulls the lever 20 towards the first position P1.

The hooked position is reached when the tread 11 reaches the completely extracted position (see figure 2 and figure 2A): the hook 21 reaches the first position P1 and inserts, with the point thereof beyond the end of the engaging element 30, which, for example, is defined by a short fixed element joined to the frame 14 and projecting more or less parallel to the side B1 of the vehicle. The geometric configuration of the step is such that when the hook 21 is in the engaged position, on one side the arm 12 cannot pass beyond the completely extracted position, i.e. it cannot distance further from the retracted position inasmuch as it strikes against a usual endrun stop 18 (see figure 2A); at the same time the arm 12 cannot rotate towards the retracted position inasmuch as the pivot 29 thereof is engaged, by the lever 20, to the element 30, and this hooking constitutes a constraint having a component which opposes (and prevents) the rotation of the arm 12 about the pivot 16 thereof.

The engaging element 30 is conformed such as to receive in a snap-coupling the hook 21 of the lever 20, following the displacing of the oscillating arm 12 towards the completely extracted position.

In detail, in a preferred though not exclusive embodiment, upstream of the engaging element 30 and in continuity there-with there is a slidable surface 31, which functions as a ramp for inviting the insertion of the hook 21 into a coupling with the engaging element 30.

When the arm 12 rotates towards the completely extracted position of the step (i.e. in the clockwork direction in the figures), before reaching the hooked position of figure 2A the distal end 20' of the lever 20 is arranged slidingly restingly against the slidable surface 31 (see figure 5); the end 20' slides along this surface until it reaches and passes beyond the end of the element 30, with which the hook 21 achieves a snap-coupling (the position illustrated with the broken line), defining the first position P1, in which the hook 21 is constrained to the engaging element 30.

The hook lever 20 further comprises a proximal end 20", distant from the distal end 20', and positioned beyond the pivot 29, which is connected with the pulling means 40, in particular at the free end of the chain 41.

The action of the chain 41 in pulling the arm 12 in the anticlockwise direction and the tread 11 towards the retracted position, is such that it brings the hook lever 20 into the second position P2, overcoming the action of the spring 23. In particular, the direction of the pulling force T produced by the chain 41, has a component which is perpendicular to the ideal line passing through the pivot 29 and through the point of application of the force T itself.

In the embodiment illustrated in the figures, when the force T is applied to the lever 20, the distal portion 20a of the lever 20 is brought into the second position P2 in which it is in contact with the proximal end 22" of the slit 22. Thanks to this contact, the lever 20, if subjected to the action of the force T, is constrained in rotation with the arm 12, in the direction of the force T, which arm 12 is then made to oscillate towards the completely retracted position by the force T, up to reaching the said retracted position. If no force T acts on the lever 20, the lever 20 tends to return into the first position P1 by action of the spring 23.

In use, in order to bring the step 10 into the completely extracted position, the cam 42 is rotated in the direction of releasing the pulling action of the chain 41; consequently the action of the spring means 17 produces the rotation of the arms 12, 13 in a clockwork direction up to the totally-extracted position. On reaching this position, the hook 21 arrives at the position of the engaging element 30, where the pulling action T ceases and the lever 20 is brought into the first position P1 in which it hooks to the engaging element 30. On reaching this position, the hook 21 slides along the introducing sliding surface 31, if the spring 23 action overcomes the action of the force T (as described herein above), or it stays at a distance from the surface 31 if the action of the force T overcomes the action of the spring 23.

Thanks to the described engaged position of the hook 21, the completely-extracted position of the step is stabilised, preventing the arms 12, 13 from oscillating, even if the step is subjected to transversal pushes or impacts. This position is also reached in a case of non-functioning of the spring means 17, by manually pushing the step: the hooking by the hook 21 is automatically obtained due to the action of the spring 23 which brings the lever 20 into the first position P1.

Unblocking the hook 21 from the first position (to return the step into a completely retracted position) is obtained as soon as the pulling action T is applied on the proximal end of the lever 20.

The unblocking action can also be done manually (for example in a case of non-functioning of the pulling means 40), by acting manually on the end 20".

## Claims

1. A mechanised retractable step for motor vehicles, comprising:
a support frame solidly constrained to the vehicle, at least a tread (11) constrained to the frame by means of a linkage system, such as to be mobile in oscillating between a completely extracted position of the tread (11) and a completely retracted position thereof with respect to a volume of the vehicle,
means (40) for pulling the tread (11) towards the completely retracted position,
**characterised in that** it comprises a hook lever (20) constrained to an oscillating part (12) of the linkage system and destined to hook to an engaging element (30) which is fixed with respect to the frame, such as to block the tread (11) in a completely extracted position thereof, the hooking action being freed following the action of the pulling means (40) in a direction of pulling the tread (11) towards the completely retracted position.

2. The step of claim 1, having at least an oscillating arm (12) an oscillation of which determines the completely extracted position and the completely retracted position of the tread (11), the hook lever (20) being constrained to the oscillating arm (12).

3. The step of claim 1, wherein the hook lever (20) comprises a distal end which bears a hook (21) for hooking to the engaging element (30), the hook lever (20) being able to oscillate between a first position (P1) in which the hook (21) becomes constrained to the engaging element (30), and a second position (P2) in which the hook (21) is freed from the constraint with the engaging element (30).

4. The step of claim 3, wherein the hook lever (20) is drawn by pushing means (23) towards the first position, and the engaging element (30) is conformed such as to receive the hook (21) in a snap-fitting, following displacement of the oscillating arm (12) towards the completely extracted position.

5. The step of claim 3, wherein the hook lever (20) comprises a proximal end (20") in a distant position from the distal end, which proximial end (20") is connected to the pulling means (40), the hook lever (20) being able to oscillate limitedly between the first and the second positions, the action of the pulling means in the direction of pulling the tread (11) towards the completely retracted position bringing the hook lever (20) into the second position (P2).

## Patentansprüche

1. Mechanisierte, einziehbare Trittfläche für Kraftfahrzeuge, umfassend:
ein Traggestell, das fest mit dem Kraftfahrzeug verbunden ist, mindestens eine Trittfläche (11), die an dem Gestell mittels eines Verbindungssystems so angebracht ist, dass sie zwischen einer vollständig ausgezogenen Stellung der Trittfläche (11) und einer vollständig eingezogenen Stellung derselben bezogen auf den Kraftfahrzeugraum schwingbar beweglich ist, Mittel (40) zum Ziehen der Trittfläche (11) in die vollständig eingezogene Stellung,
**dadurch gekennzeichnet, dass** sie einen Hakenhebel (20) umfasst, der fest an einem Schwingteil (12) des Verbindungssystems angebracht und dazu bestimmt ist, sich in ein Eingreifelement (30) einzuhängen, das an dem Gestell befestigt ist, um die Trittfläche (11) in einer vollständig ausgezogenen Stellung zu sperren, wobei die Einhängwirkung durch die Wirkung der Zugmittel (40) in Richtung des Herausziehens der Trittfläche (11) in die vollständig eingezogene Stellung gelöst wird.

2. Trittfläche nach Anspruch 1, die mindestens einen Schwingarm (12) besitzt, durch dessen Schwingung die vollständig ausgezogene Stellung und die vollständig eingezogene Stellung der Trittfläche (11) bewirkt wird, wobei der Hakenhebel (20) fest an dem Schwingarm (12) angebracht ist.

3. Trittfläche nach Anspruch 1, wobei der Hakenhebel (20) ein distales Ende umfasst, das einen Haken (21) zum Einhängen des Eingreifelements (30) trägt, wobei der Hakenhebel in der Lage ist, zwischen einer ersten Stellung (P1), in der der Haken (21) in das Eingreifelement (30) eingreift, und einer zweiten Stellung (P2), in der der Haken (21) von der Verbindung von dem Eingreifelement (30) gelöst ist, zu schwingen.

4. Trittfläche nach Anspruch 3, wobei der Hakenhebel (20) durch Schubmittel (23) in Richtung der ersten Stellung gezogen wird und das Eingreifmittel (30) so ausgebildet ist, dass es den Haken (21) in einer Schnappverbindung aufnimmt, nachdem der Schwingarm (12) in die vollständig ausgezogene Stellung verbracht wurde.

5. Trittfläche nach Anspruch 3, wobei der Hakenhebel (20) ein proximales Ende (20") in einer vom distalen Ende entfernten Stellung umfasst, wobei das proximale Ende (20") mit den Zugmitteln (40) verbunden ist, wobei der Hakenhebel (20) in der Lage ist, begrenzt zwischen der ersten und der zweiten Stellung zu schwingen, wobei die Wirkung der Zugmittel in Richtung des Ziehens der Trittfläche (11) in die vollständig eingezogene Stellung den Hakenhebel (20) in die zweite Stellung (P2) bringt.

## Revendications

1. Marche rétractable mécanisée pour véhicules à moteur comprenant :
un châssis de support relié rigidement au véhicule, au moins un plan de marche (11) relié au châssis au moyen d'un système articulé, de manière à être mobile par oscillation entre une position complètement extraite du plan de marche (11) et une position complètement rétractée de celui-ci par rapport à un volume du véhicule,
des moyens (40) pour tirer le plan de marche (11) vers la position complètement rétractée, **caractérisée en ce qu'**elle comprend un levier à crochet (20) relié à une partie oscillante (12) du système articulé et destiné à accrocher à un élément d'engagement (30) qui est fixe par rapport au châssis, de manière à bloquer le plan de marche (11) dans une position complètement extraite de celui-ci, l' action d'accrochage étant libérée à la suite de l' action des moyens de traction (40) dans une direction de traction du plan de marche (11) vers la position complètement rétractée.

2. Marche selon la revendication 1, ayant au moins un bras oscillant (12) dont une oscillation détermine la position complètement extraite et la position complètement rétractée du plan de marche (11), le levier à crochet (20) étant relié au bras oscillant (12).

3. Marche selon la revendication 1, dans laquelle le levier à crochet (20) comprend une extrémité distale qui supporte un crochet (21) pour accrocher l'élément d'engagement (30), le levier à crochet (20) étant capable d'osciller entre une première position (P1) dans laquelle le crochet (21) devient relié à l'élément d'engagement (30) et une deuxième position (P2) dans laquelle le crochet (21) est libéré de la liaison avec l'élément d'engagement (30).

4. Marche selon la revendication 3, dans laquelle le levier à crochet (20) est tiré par des moyens de poussée (23) vers la première position, et l'élément d'engagement (30) est conformé de manière à recevoir le crochet (21) dans une fixation à emboîtement-pression, suite au déplacement du bras oscillant (12) vers la position complètement extraite.

5. Marche selon la revendication 3, dans laquelle le levier à crochet (20) comprend une extrémité proximale (20") dans une position éloignée de la position distale, laquelle extrémité proximale (20") est connectée au moyen de traction (40), le levier à crochet (20) étant capable d'osciller de manière limitée entre les première et deuxième positions, l'action des moyens de traction dans la direction de traction du plan de marche (11) vers la position complètement rétractée en amenant le levier à crochet (20) dans la deuxième position (P2).
